(19) Europäisches Patentamt
European Patent Office
Office européen des brevets

(11) **EP 4 596 794 A1**

(12) **EUROPEAN PATENT APPLICATION**
published in accordance with Art. 153(4) EPC

(43) Date of publication:
**06.08.2025 Bulletin 2025/32**

(21) Application number: **23871504.9**

(22) Date of filing: **09.08.2023**

(51) International Patent Classification (IPC):
**E02F 3/43** (2006.01)   **E02F 9/20** (2006.01)
**E02F 9/26** (2006.01)

(52) Cooperative Patent Classification (CPC):
**E02F 3/43; E02F 9/20; E02F 9/26**

(86) International application number:
**PCT/JP2023/029070**

(87) International publication number:
**WO 2024/070262 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022158918**

(71) Applicant: **Hitachi Construction Machinery Co., Ltd.**
**Tokyo 110-0015 (JP)**

(72) Inventors:
• **SUZUKI, Yusuke**
**Tsuchiura-shi, Ibaraki 300-0013 (JP)**
• **TANAKA, Hiroaki**
**Tsuchiura-shi, Ibaraki 300-0013 (JP)**
• **KANARI, Yasuhiko**
**Tsuchiura-shi, Ibaraki 300-0013 (JP)**
• **NARAZAKI, Akihiro**
**Tsuchiura-shi, Ibaraki 300-0013 (JP)**
• **SAKAMOTO, Hiroshi**
**Tsuchiura-shi, Ibaraki 300-0013 (JP)**

(74) Representative: **MERH-IP Matias Erny Reichl Hoffmann**
**Patentanwälte PartG mbB**
**Paul-Heyse-Straße 29**
**80336 München (DE)**

(54) **WORK MACHINE**

(57)      It is an object of the present invention to provide a work machine that is capable of making a working attachment operate accurately along a construction target surface in the vicinity thereof and of allowing an operator to operate the work machine while recognizing the load acting on a front work implement thereof when the working attachment is not in the vicinity of the construction target surface. To accomplish the object, a controller calculates target velocitys for actuators on the basis of an operation amount from an operation input device, postures of a machine main body and the front work implement, and the distance between the working attachment and the construction target surface, calculates operation command values for the actuators on the basis of the target velocitys, calculates correction amounts for the operation command values on the basis of loads on the actuators sensed by a load sensor 27, and adds the correction amounts to the operation command values.

[FIG. 3]

**Description**

Technical Field

The present invention relates to a work machine for use in road work, construction work, civil engineering work, dredging work, or demolition work, for example.

Background Art

There have been known in the prior art work machines for use in road work, construction work, civil engineering work, or dredging work, for example, each of the work machines having a machine main body that includes a track structure that travels by a power system and a swing structure swingably mounted on the track structure, and a multi-joint front work implement vertically pivotably mounted on the machine main body, in which the front work implement includes front members that are driven by respective hydraulic cylinders. One example of the work machines is what is called a hydraulic excavator that has a front work implement including a boom, an arm, and a bucket.

Some hydraulic excavators of the type described perform what is called machine control for setting a construction target surface up to which the bucket is to excavate the ground and automatically controlling the boom operation depending on the distance between the construction target surface and the bucket so as to enable the bucket to excavate the ground along the construction target surface.

In the hydraulic excavators of the type described above, in order to enable the bucket to excavate the ground accurately along the construction target surface, it is necessary to accurately control the operating state of the front work implement, i.e., the operating velocities of the hydraulic cylinders. Patent Document 1 discloses a technology in which a data acquiring section is provided for acquiring data with regard to operation command values and cylinder velocities and a deriving section is provided for deriving operation start operation command values at the time when the hydraulic cylinders start operating from a stopped state and a slow-velocity operation characteristic representing the relation between the operation command values and cylinder velocities in a slow-velocity range, for performing velocity control on the hydraulic cylinders.

Prior Art Documents

Patent Documents

Patent Document 1: PCT Patent Publication No. WO2015/137524

Summary of the Invention

Problems to be Solved by the Invention

For work machines exemplified by hydraulic excavators, the positional relation between the construction target surface and the front work implement is different in each work. Moreover, since the front work implement excavates the ground while being moved along the construction target surface, the working posture of the front work implement varies at all times. Thus, the loads that act on the hydraulic cylinders vary from time to time as the posture of the front work implement varies while excavating the ground.

Generally, inasmuch as the operating velocity of a hydraulic cylinder varies depending on the amount of a hydraulic fluid introduced into the hydraulic cylinder and the load acting on the hydraulic cylinder, providing the operation command value for the hydraulic cylinder is constant, when the load acting on the hydraulic cylinder increases, the operating velocity of the hydraulic cylinder decreases.

According to the technology disclosed in Patent Document 1, as an operation command value and an operation characteristic of a hydraulic cylinder are measured at a particular working posture, if the posture of the front work implement varies during excavating, then the cylinder velocity cannot accurately be controlled and hence the bucket is unable to excavate the ground accurately along the construction target surface.

In contrast, when the operating velocities of hydraulic cylinders of a hydraulic excavator vary depending on the load acting on its front work implement, i.e., the loads acting on the hydraulic cylinders, it is easy for the operator of the hydraulic excavator to recognize the load status of the front work implement. Consequently, if the operating velocities of the hydraulic cylinders remain constant irrespective of the load on the front work implement, the operator finds it difficult to recognize the load on the front work implement and to maneuver the hydraulic excavator.

The present invention has been made in view of the above problems. It is an object of the present invention to provide a work machine that is capable of making a working attachment operate accurately along a construction target surface in the vicinity thereof and of allowing the operator to operate the work machine while recognizing the load acting on a front work implement thereof when the working attachment is not in the vicinity of the construction target surface.

Means for Solving the Problems

To achieve the above object, according to the present invention, there is provided a work machine including a machine main body, a front work implement that is vertically pivotably mounted on the machine main body and that has a working attachment, an actuator for driving the front work implement, a drive device for driving the actuator, an operation input device for instructing the actuator to operate, a posture sensor for sensing postures of the machine main body and the front work implement, a target surface information setting device for setting a construction target surface for the working attachment, and a controller that outputs an operation command value for the actuator to the drive device on the basis of information input from the operation input device, the posture sensor, and the target surface information setting device, such that the working attachment is positioned along or above the construction target surface, the work machine including a load sensor for sensing a load on the actuator, in which the controller is configured to calculate a target velocity for the actuator on the basis of an operation amount from the operation input device, the posture, and a distance between the working attachment and the construction target surface, calculate an operation command value for the actuator on the basis of the target velocity, calculate a correction amount for the operation command value on the basis of the load on the actuator sensed by the load sensor, and add the correction amount to the operation command value.

According to the present invention thus configured, the operation command value for the actuator is calculated such that the distance between the working attachment and the construction target surface is reduced, the correction amount for the operation command value is calculated on the basis of the load on the actuator, and the correction amount is added to the operation command value. It is thus possible to make the working attachment operate accurately along the construction target surface in the vicinity thereof and to allow the operator to operate the work machine while recognizing the load acting on the front work implement when the working attachment is not in the vicinity of the construction target surface.

Advantages of the Invention

The work machine according to the present invention makes it possible to make the working attachment operate accurately along the construction target surface in the vicinity thereof and to allow the operator to operate the work machine while recognizing the load acting on the front work implement when the working attachment is not in the vicinity of the construction target surface.

Brief Description of the Drawings

FIG. 1 is a side elevational view of a hydraulic excavator according to an embodiment of the present invention.
FIG. 2 is a configurational diagram of a control system according to the embodiment of the present invention.
FIG. 3 is a functional block diagram of an information processing device according to the embodiment of the present invention.
FIG. 4 is a view illustrating an example of operation of the hydraulic excavator.
FIG. 5 is a diagram illustrating an operation characteristic of a hydraulic cylinder.
FIG. 6 is a diagram illustrating an excavation trajectory by machine control in a case where an operation command value for a boom cylinder is not corrected.
FIG. 7 is a view illustrating demanded motion vectors according to the embodiment of the present invention.
FIG. 8 depicts diagrams illustrating correction gains according to the embodiment of the present invention.
FIG. 9 depicts diagrams illustrating examples of corrected operation command values according to the embodiment of the present invention.
FIG. 10 is a view illustrating a method of estimating a load on a boom cylinder according to the embodiment of the present invention.
FIG. 11 is a diagram illustrating excavation trajectories by machine control according to the embodiment of the present invention.
FIG. 12 is a flowchart of a processing sequence of the information processing device according to the embodiment of the present invention.

Mode for Carrying Out the Invention

A hydraulic excavator given as an example of a work machine according to an embodiment of the present invention will be described hereinbelow with reference to the drawings. Throughout views, equivalent members are denoted by identical reference characters and their redundant description will be omitted below.

<Hydraulic excavator>

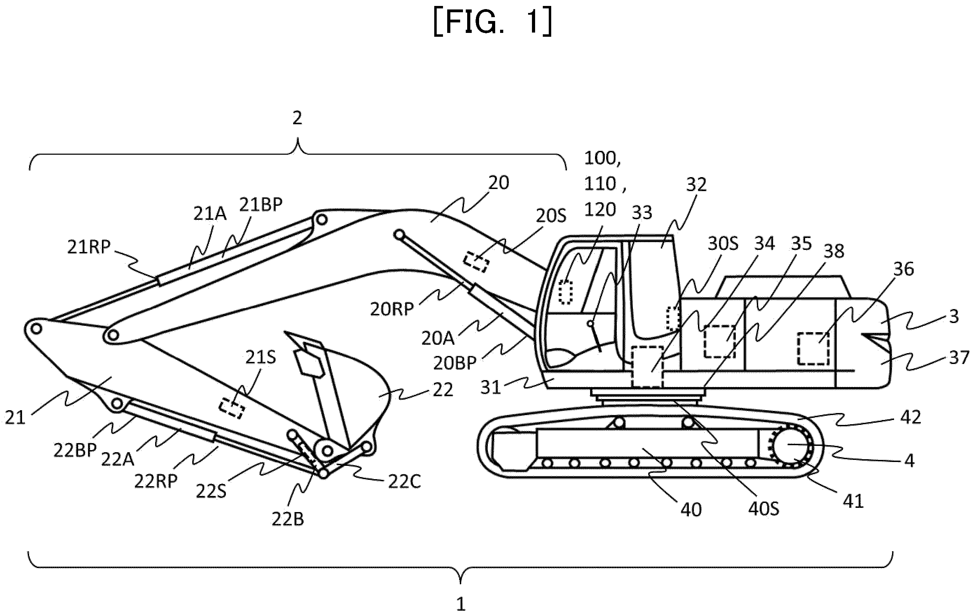

FIG. 1 is a side elevational view of a hydraulic excavator according to an embodiment of the present invention. As illustrated in FIG. 1, a hydraulic excavator 1 includes a front work implement 2, a swing structure 3 as a machine main body, and a track structure 4.

The front work implement 2 is pivotable with respect to the swing structure 3 about a coupled portion, and the swing structure 3 is pivotable with respect to the track structure 4 about a coupled portion. The front work implement 2 includes a boom 20 having an end coupled to the swing structure 3, an arm 21 having an end coupled to the boom 20, a bucket 22 as an working attachment having an end coupled to the arm 21, a boom cylinder 20A having both ends coupled respectively to the boom 20 and the swing structure 3, an arm cylinder 21A having both ends coupled respectively to the arm 21 and the boom 20, a first link 22B having an end coupled to the arm 21, a second link 22C having an end coupled to the bucket 22, and a bucket cylinder 22A having an end coupled to the other ends of the first link 22B and the second link 22C and another end coupled to the arm 21. These members are vertically pivotable about their coupled portions. The track structure 4 includes a track motor 41 and a crawler belt 42.

The boom cylinder 20A, the arm cylinder 21A, and the bucket cylinder 22A are of a structure that is extendible and contractible under hydraulic pressure and are capable of making the boom 20, the arm 21, and the bucket 22 pivot as they are extended and contracted. Pressure sensors 20BP and 20RP are mounted on the boom cylinder 20A for sensing a bottom-side pressure and a rod-side pressure, respectively. Pressure sensors 21BP and 21RP are mounted on the arm cylinder 21A for sensing a bottom-side pressure and a rod-side pressure, respectively. Pressure sensors 22BP and 22RP are mounted on the bucket cylinder 22A for sensing a bottom-side pressure and a rod-side pressure, respectively, thereof. The bucket 22 can be replaced with any of various working attachments, which are not depicted, such as a grapple, a breaker, a ripper, and a magnet.

A boom IMU (Inertial Measurement Unit) 20S for sensing the posture of the boom 20 is mounted on the boom 20. An arm IMU 21S for sensing the posture of the arm 21 is mounted on the arm 21. A bucket IMU 22S for sensing the posture of the bucket 22 is mounted on the bucket 22. Each of the boom IMU 20S, the arm IMU 21S, and the bucket IMU 22S includes an angular velocity sensor and an acceleration sensor.

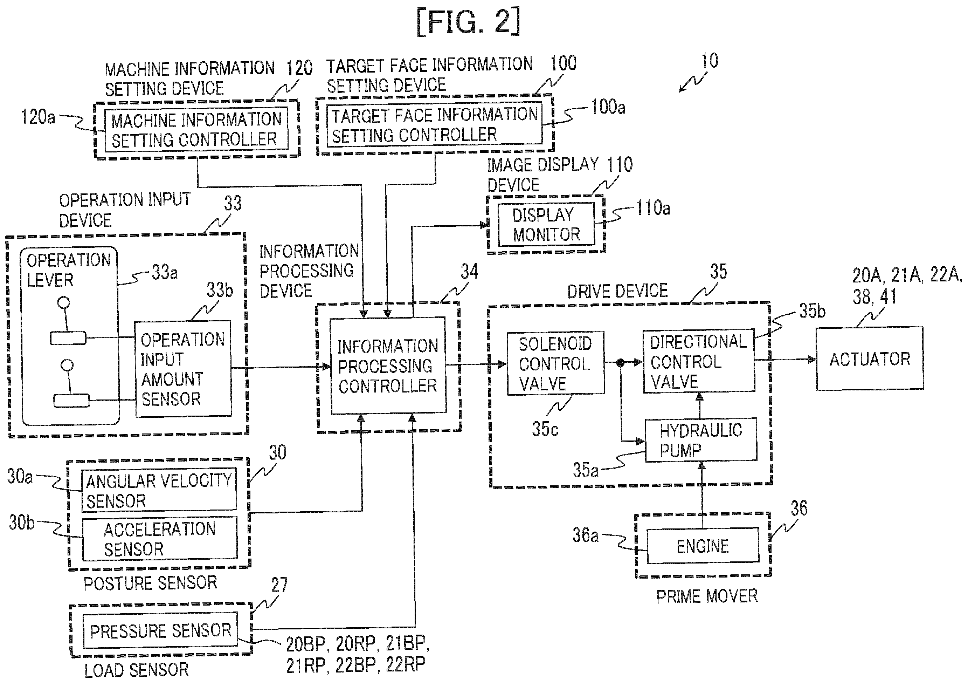

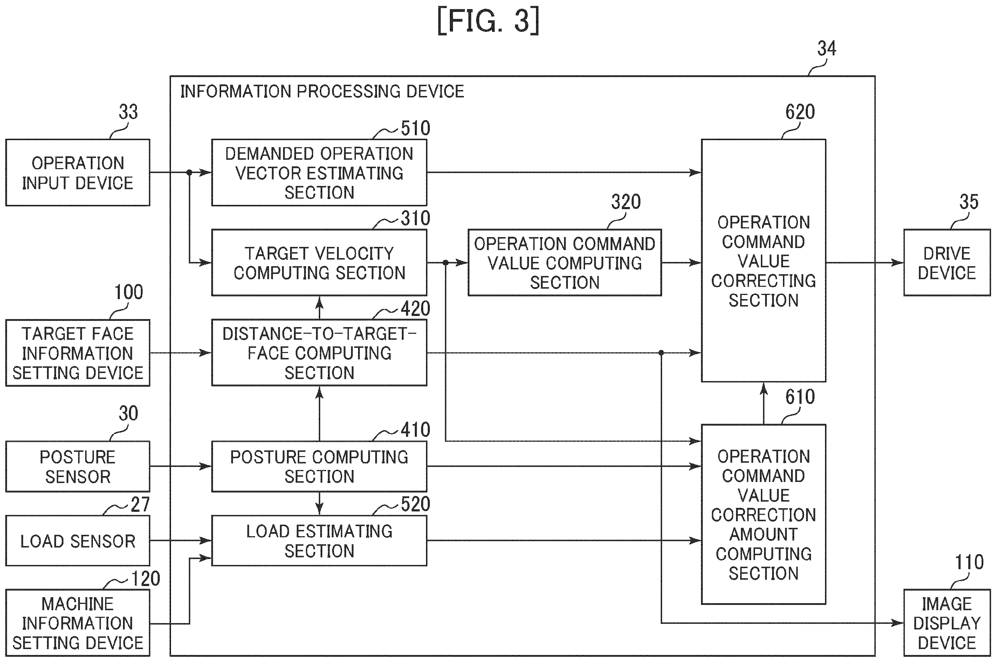

The swing structure 3 includes a swing structure IMU 30S, a main frame 31, a cabin 32, an information processing device 34, a drive device 35, a prime mover 36, a counterweight 37, and a swing motor 38. The swing structure IMU 30S, the cabin 32, the information processing device 34, the drive device 35, the prime mover 36, the counterweight 37, and the swing motor 38 are mounted on the main frame 31. The swing structure IMU 30S includes an acceleration sensor and an angular velocity sensor and is able to sense an angle of inclination of the swing structure 3. The cabin 32 houses therein an operation input device 33, a target surface information setting device 100, an image display device 110, and a machine information setting device 120. The operation input device 33, the information processing device 34, the drive device 35, the prime mover 36, the target surface information setting device 100, the image display device 110, and the machine information setting device 120 will be described later with reference to FIG. 2 or 3.

The track structure 4 includes a track frame 40, the track motor 41, and the crawler belt 45. The crawler belt 45 is disposed around the track frame 40 and is driven by the track motor 41. The operator operates the operation input device 33 to vary the rotational velocity of the track motor 41 and thereby adjust the velocity at which the hydraulic excavator 1 travels. The track structure 4 is not limited to one including the crawler belt 45, and may be one including traveling wheels or legs.

<Control system>

FIG. 2 is a configurational diagram of a control system incorporated in the hydraulic excavator 1. As illustrated in FIG. 2, a control system 10 includes the operation input device 33, a posture sensor 30, a load sensor 27, the information processing device 34, the drive device 35, the prime mover 36, the target surface information setting device 100, the image display device 110, and the machine information setting device 120.

The operation input device 33 includes an operation lever 33a that can be inclined by the operator and an operation input amount sensor 33b. The amount of inclination of the operation lever 33a (operation amount) is converted by the operation input amount sensor 33b into an electric signal that is input to the information processing device 34. The operation input device 33 may be of the hydraulic pressure pilot type or may be of the type operable from a remote location.

The posture sensor 30 includes angular velocity sensors 30a and acceleration sensors 30b and can measure the angles of the members of the front work implement 2 and the swing structure 3. The load sensor 27 includes the pressure sensors 20BP, 20RP, 21BP, 21RP, 22BP, and 22RP that measure the loads on the actuators 20A, 21A, and 22A that drive the front work implement 2.

The information processing device 34 includes an information processing controller 34a and processes control signals and sensed signals from various devices. The operation input device 33, the posture sensor 30, the load sensor 27, the target surface information setting device 100, the image display device 110, and the machine information setting device 120 are connected to the information processing device 34. The information processing device 34 outputs operation command values for driving the hydraulic excavator 1 to the drive device 35.

The drive device 35 includes a hydraulic pump 35a, a directional control valve 35b, and a solenoid control valve 35c. The hydraulic pump 35a generates a hydraulic pressure required to operate the hydraulic excavator 1. The solenoid control valve 35c drives the directional control valve 35b according to an operation command value from the information processing device 34. The directional control valve 35b controls the flow rates and directions of a hydraulic fluid supplied from the hydraulic pump 35a to the actuators (the boom cylinder 20A, the arm cylinder 21A, the bucket cylinder 22A, the swing motor 38, and the track motor 41). The drive device 35 may further drive working attachments and devices that are not referred to above.

The prime mover 36 includes an engine 36a. The engine 36a drives the hydraulic pump 35a. However, the prime mover 36 is not limited to the engine, and may include any of other power sources such as an electrically driven motor.

The target surface information setting device 100 includes a target surface information setting controller 100a and can set and manage a construction target surface. The image display device 110 includes a display monitor 110a and can display the posture of the hydraulic excavator 1, information with respect to a construction target surface set by the target surface information setting device 100, the positional relation and distance between the front work implement 2 and the construction target surface, for the operator to see. The machine information setting device 120 includes a machine information setting controller 120a and can set the mass of the bucket 22 attached to the front work implement 2 and the center of gravity of the front work implement 2, as machine information.

<Operation input device>

The hydraulic excavator 1 is generally configured such that the larger the amount of inclination of the operation lever 33a, the higher the operating velocities of the actuators are. The operator can vary the operating velocities of the respective actuators 20A, 21A, 22A, 38, and 41 by adjusting the amount of inclination of the operation lever 33a. The operation input device 33 includes an operation input amount sensor 33b for electrically sensing the amount of inclination of the operation lever 33a, and can sense target operations for the respective actuators as demanded by the operator. The operation input amount sensor 33b is not limited to one for directly sensing the amount of inclination of the operation lever 33a, and may be of the type for sensing an operation pilot pressure.

<Posture sensor>

The posture sensor 30 includes the angular velocity sensors and the acceleration sensors that are included respectively in the swing structure IMU 30S, the boom IMU 20S, the arm IMU 21S, and the bucket IMU 22S, and is capable of obtaining angular velocity information and acceleration information at their respective positions. Since the boom 20, the arm 21, the bucket 22, the boom cylinder 20A, the arm cylinder 21A, the bucket cylinder 22A, the first link 22B, the second link 22C, and the swing structure 3 are swingably mounted in position, the postures of the boom 20, the arm 21, the bucket 22, and the swing structure 3 can be estimated from their mechanically linked relation. The indicated process of sensing the postures is given by way of example only. Alternatively, the relative angles of the members of the front work implement 2 may be directly measured, or the postures of the members of the hydraulic excavator 1 may be calculated from sensed strokes of the boom cylinder 20A, the arm cylinder 21A, and the bucket cylinder 22A.

<Load sensor>

The load sensor 27 includes the pressure sensors 20BP and 20RP for sensing the pressures of the boom cylinder 20A, the pressure sensors 21BP and 21RP for sensing the pressures of the arm cylinder 21A, and the pressure sensors 22BP and 22RP for sensing the pressures of the bucket cylinder 22A. The pressure sensors may be mounted directly on the cylinders or may be mounted on passageways extending from the drive device 35 to the cylinders. The load sensor 27 is not limited to the pressure sensors, and may be load cells for directly sensing toque acting on the joints, and may employ a method of estimating loads from sensed strains on the front work implement 2 or a method of estimating loads from the output power of the hydraulic pump 35a and the engine 36a.

<Target surface information setting device>

The target surface information setting device 100 is capable of setting a construction target surface as an excavation target for the front work implement 2. The construction target surface may be set as having a plurality of planar surfaces in addition to a single planar surface, and may be set as a range that can be excavated by the front work implement 2. The construction target surface may be set in a coordinate system based on the work machine 1 or a coordinate system based on the earth.

<Drive device>

The drive device 35 that includes the hydraulic pump 35a, the directional control valve 35b, and the solenoid control valve 35c drives the actuators 20A, 21A, 22A, 38, and 41 according to operation command values input from the information processing device 34. The operation command values input from the information processing device 34 are converted by the solenoid control valve 35c into pilot pressures that drive the directional control valve 35b. The directional control valve 35b adjusts the flow rates of hydraulic fluids supplied to the actuators 20A, 21A, 22A, 38, and 41 and thereby controls the operating velocities of the actuators 20A, 21A, 22A, 38, and 41.

<Information processing device>

FIG. 3 is a functional block diagram of the information processing device 34. As illustrated in FIG. 3, the information processing device 34 includes a target velocity computing section 310, an operation command value computing section 320, a posture computing section 410, a distance-to-target surface computing section 420, a demanded motion vector estimating section 510, a load estimating section 520, an operation command value correction amount computing section 610, and an operation command value correcting section 620. The information processing device 34 includes the information processing controller 34a and input/output interfaces for inputting signals from and outputting signals to an external device. The information processing device 34 realizes the functions of the sections by executing programs stored in a storage device such as a ROM.

The target velocity computing section 310 calculates target velocitys for the actuators 20A, 21A, and 22A that drive the front work implement 2, on the basis of an operation amount input to the operation input device 33 and a distance calculated by the distance-to-target surface computing section 420 from the front work implement 2 to a construction target surface (e.g., the distance from a bucket claw tip to the construction target surface), and outputs the target velocitys to the operation command value computing section 320 and the operation command value correction amount computing section 610.

The operation command value computing section 320 calculates operation command values for driving the drive device 35, on the basis of the target velocitys calculated by the target velocity computing section 310 and outputs the calculated operation command values to the operation command value correcting section 620.

The posture computing section 410 calculates postures of the front work implement 2 and the swing structure 3 on the basis of angle information from the posture sensor 30, and outputs the calculated postures to the distance-to-target surface computing section 420, the load estimating section 520, and the operation command value correction amount computing section 610.

The distance-to-target surface computing section 420 calculates a distance from the front work implement 2 to the construction target surface on the basis of set information from the target surface information setting device 100 and the postures of the front work implement 2 and the swing structure 3 calculated by the posture computing section 410, and outputs the calculated distance to the operation command value correction amount computing section 610 and the image display device 110.

The demanded motion vector estimating section 510 estimates the direction of an motion vector of the tip end of the front work instrument (e.g., the distal end of the bucket) demanded by the operator (demanded motion vector), on the basis of an operation amount input to the operation input device 33, and outputs the estimated direction to the operation command value correction amount computing section 610.

The load estimating section 520 estimates loads acting on the respective actuators that drive the front work implement 2, on the basis of load information from the load sensor 27, set information from the machine information setting device 120, and the postures of the front work implement 2 and the swing structure 3 calculated by the posture computing section 410, and outputs the estimated loads to the operation command value correction amount computing section 610.

The operation command value correction amount computing section 610 calculates a correction amount for an operation command value for driving the drive device 35, on the basis of a target velocity for the front work implement 2 calculated by the target velocity computing section 310, the postures of the front work implement 2 and the swing structure 3 calculated by the posture computing section 410, and a load on the front work implement 2 estimated by the load estimating section 520, and outputs the calculated correction amount to the operation command value correcting section 620.

The operation command value correcting section 620 corrects the operation command values calculated by the operation command value computing section 320 by limiting a correction amount calculated by the operation command value correction amount computing section 610, according to a demanded motion vector estimated by the demanded motion vector estimating section 510 and a distance calculated by the distance-to-target surface computing section 420 and adding the limited correction amount to the operation command values calculated by the operation command value computing section 320, and outputs the corrected operation command values to the drive device 35.

<Operation of machine control >

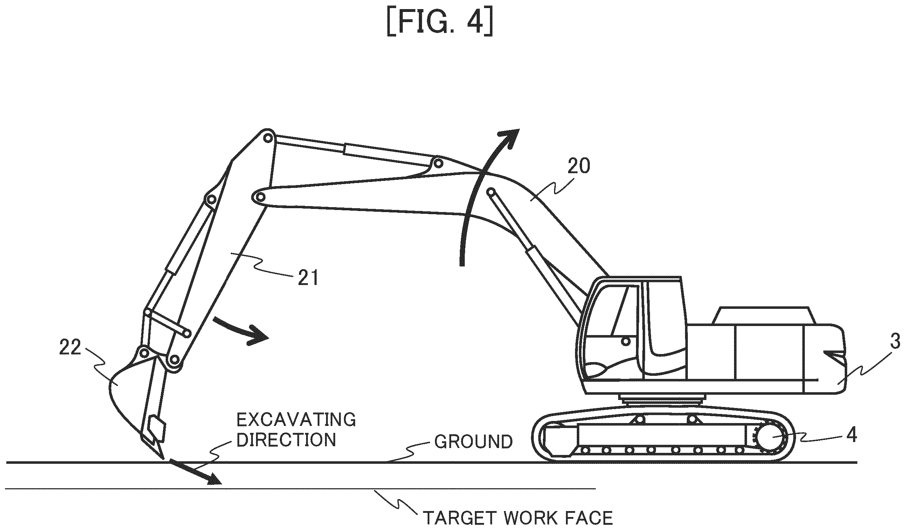

In machine control, as illustrated in FIG. 4, the information processing device 34 automatically controls the boom 20 depending on the operating velocity of the arm 21 such that the bucket 22 operates along a preset construction target surface. For example, when the operator performs a crowding operation of the arm 21 in the state illustrated in FIG. 4, the boom 20 is automatically raised such that the bucket tip end operates along the construction target surface. The operator now can perform excavating along the construction target surface without skilled performance.

<Operation characteristic of hydraulic cylinder>

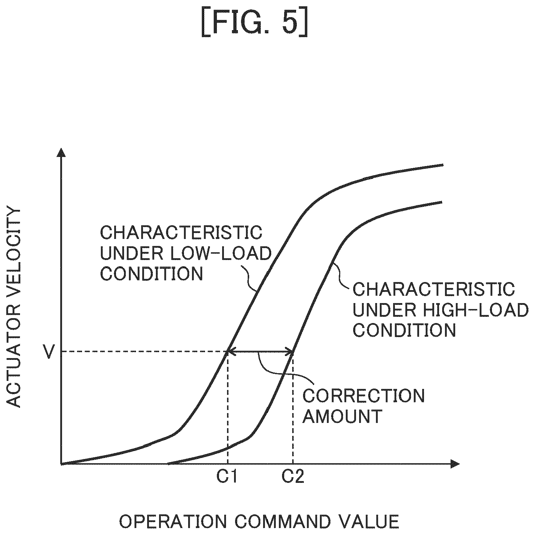

FIG. 5 illustrates an example of the relation (operation characteristic) between operation command values for driving a hydraulic cylinder and hydraulic cylinder velocities. When the load on the hydraulic cylinder is low, the operating velocity of the hydraulic cylinder increases quickly as the operation command value goes higher, as indicated by the solid-line curve. On the other hand, when the load on the hydraulic cylinder is high, the degree to which the operating velocity of the hydraulic cylinder increases with respect to the operation command value is smaller than that when the load on the hydraulic cylinder is low, as indicated by the dotted-line curve. The load on the boom cylinder 20A varies mainly depending on the posture of the front work implement 2. Specifically, the load on the boom cylinder 20A is larger when the front work implement 2 is in a folded posture and is smaller when the front work implement 2 is in a fully reached posture. Consequently, when the hydraulic cylinder is to be adjusted to a particular velocity, it is necessary to correct the operation command value depending on the load acting on the hydraulic cylinder. In FIG. 5, an operation command value C2 for causing the hydraulic cylinder to operate at a velocity V when the load on the hydraulic cylinder is high is determined by adding a correction amount depending on the load to an operation command value C1 for causing the hydraulic cylinder to operate at the velocity V when the load on the hydraulic cylinder is low.

A specific method of correcting an operation command value will be described below. The operating velocity of a hydraulic cylinder can be determined using the orifice's equation (Equation 1).

[Math. 1]

$$Q = CA\sqrt{\frac{2 \cdot \Delta P}{\rho}}$$

Q: flow rate
C: flow rate coefficient
A: cross-sectional area of the fluid passage
$\Delta$P: across-the-cylinder differential pressure
P: fluid density

With the hydraulic excavator 1, the flow rate Q is determined by the diameter of the hydraulic cylinder and the target velocity therefor, the flow rate coefficient C and the fluid density P are determined by the physical property values of the hydraulic fluid used, and the across-the-cylinder differential pressure $\Delta$P is determined by the load on the hydraulic cylinder, as described later. The cross-sectional area A of the fluid passage can be adjusted by the operation command value.

In other words, if the hydraulic cylinder is to be caused to operate at a predetermined velocity (i.e., flow rate), it is sufficient if the cross-sectional area A of the fluid passage (i.e., operation command value) is adjusted depending on the across-the-cylinder differential pressure $\Delta$P, the flow rate coefficient C, and the fluid density P. Especially while the hydraulic excavator 1 is in operation, since the across-the-cylinder differential pressure $\Delta$P varies greatly due to the posture of the front work implement 2 and the flow rate coefficient C and the fluid density P vary scarcely, the operation command value is only required to be adjusted depending on the across-the-cylinder differential pressure ΔP.

If an operation command value is to be calculated on the basis of the relation between operation amounts and operation command values, then the relation between operation amounts and operation command values may be preset by identifying in advance the relation between operation amounts and operation command values and the relation between operation command values and cylinder velocities.

<Effects that an actuator load has on excavation trajectories>

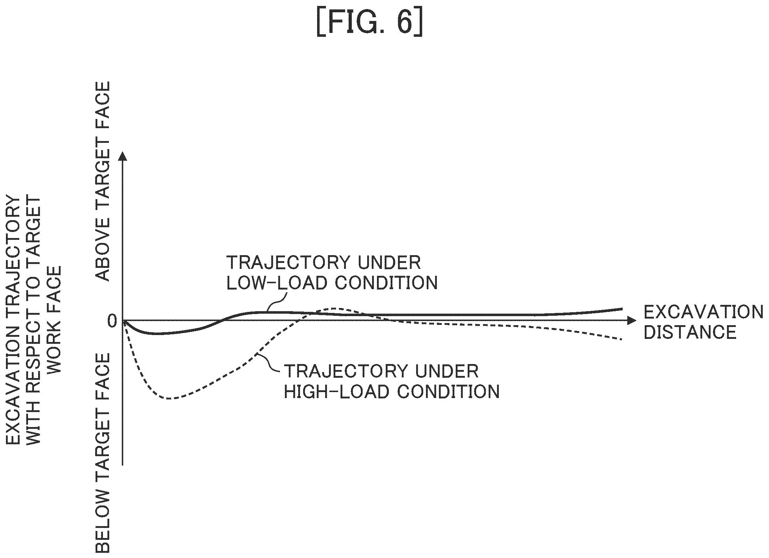

Excavation trajectories by machine control in a case where an operation command value for the boom cylinder 20A has not been corrected are illustrated in FIG. 6. In a case where the load on the boom cylinder 20A is small, errors of an excavation trajectory with respect to a construction target surface are small as indicated by the solid-line curve. On the other hand, in a case where the load on the boom cylinder 20A is large, the boom cylinder 20A is unable to raise the boom 20 sufficiently, so that the hydraulic excavator 1 tends to dig the ground deeper than the construction target surface as indicated by the dotted-line curve, and fails to excavate accurately along the construction target surface.

Especially, using the characteristic relation between operating velocities of a hydraulic cylinder and operation command values therefor, acquired under particular conditions as disclosed in Patent Document 1, errors between the construction target surface and the excavation trajectory are larger as the differences between the conditions under which the characteristics are acquired and actual work postures and loads are larger.

<Demanded motion vectors>

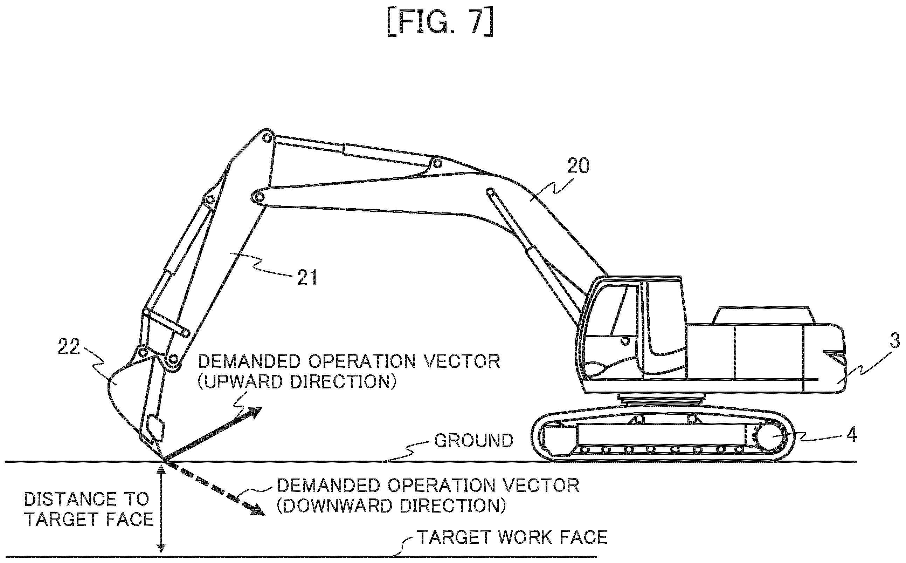

Demanded operation velocities for the respective actuators of the front work implement 2 are calculated from an operation amount input to the operation input device 33. Demanded operating velocities for the respective actuators of the front work implement 2 can be converted into demanded motion vectors of the bucket tip end owing to the geometrical structure of the front work implement 2. As indicated by the solid-line arrow in FIG. 7, when the demanded motion vector for the bucket tip end is of a direction away from the construction target surface, excavation controlled by machine control is not required because the operator intends to move the bucket 22 away from the construction target surface. In contrast, as indicated by the dotted-line arrow in FIG. 7, when the demanded motion vector for the bucket tip end is of a direction toward the construction target surface, excavation controlled by machine control is required because the operator intends to move the bucket 22 toward the construction target surface. In this manner, it can be determined whether accurate actuator velocities need to be controlled by machine control or not, i.e., whether operation command values need to be corrected depending on the load acting on the actuators or not, from an operation amount input to the operation input device 33.

<Method of correcting an operation command value>

An example of a method of correcting an operation command value will be illustrated. First, in a case where the distance between the bucket 22 and the construction target surface is small, i.e., in a case where the bucket 22 is operating along the construction target surface, since it is necessary to accurately control the velocity of the actuator, the operation command value is constantly corrected depending on the load on the actuator, with the correction amount limited insignificantly. On the other hand, in a case where the distance between the bucket 22 and the construction target surface is large, i.e., in a case where the bucket 22 is operating at positions far spaced from the construction target surface, since the velocity of the actuator is to be increased and reduced depending on the load on the actuator to make the operator able to operate the bucket 22 well, the operation command value is not corrected, with the correction amount limited significantly.

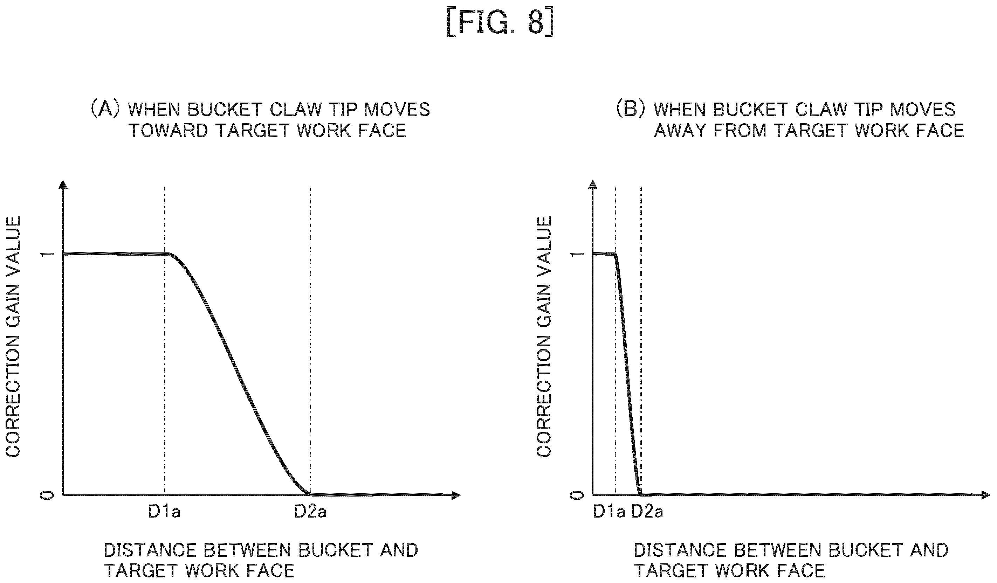

A method of limiting the correction amount for an operation command value will be described below with reference to FIG. 8. FIG. 8 depicts diagrams illustrating the relation between the distances between the bucket 22 and construction target surfaces and correction gains. A correction gain represents a weighing coefficient that is used to multiply a correction amount before the correction amount is added to an operation command value.

In a case where the bucket 22 approaches the construction target surface (in a case where the demanded motion vector is of a direction toward the construction target surface), as illustrated in FIG. 8A, when the distance between the bucket 22 and the construction target surface is smaller than a preset value D1a, the correction gain is 1 and the correction amount depending on the cylinder load is added, without being limited, to the operation command value. It is thus possible to make the bucket 22 operate accurately along the construction target surface without depending on the actuator load. When the distance is equal to or larger than a second preset value D2a, the correction gain is 0, and the operation command value is not corrected. The machine control is thus invalidated, allowing the operator to operate the bucket 22 while recognizing the load. When the distance is equal to or larger than the first set value D1a but smaller than the second preset value D2a, the correction gain changes continuously from 1 to 0 as the distance increases. Since the extent to which the correction amount is limited continuously changes depending on the distance between the bucket 22 and the construction target surface, it is possible to reduce operator's strange and uneasy feelings at the time of switching between the machine control state and the manual operation state.

The correction gain in a case where the bucket 22 moves away from the construction target surface (when the demanded motion vector is of a direction away from the construction target surface) is also determined depending on the distance between the bucket 22 and the construction target surface, as illustrated in FIG. 8(B). However, a first preset value D1b and a second preset value D2b are smaller than the first preset value D1a and the second preset value D2a, respectively, at the time when the bucket 22 approaches the construction target surface (when the demanded motion vector is of a direction toward the construction target surface).

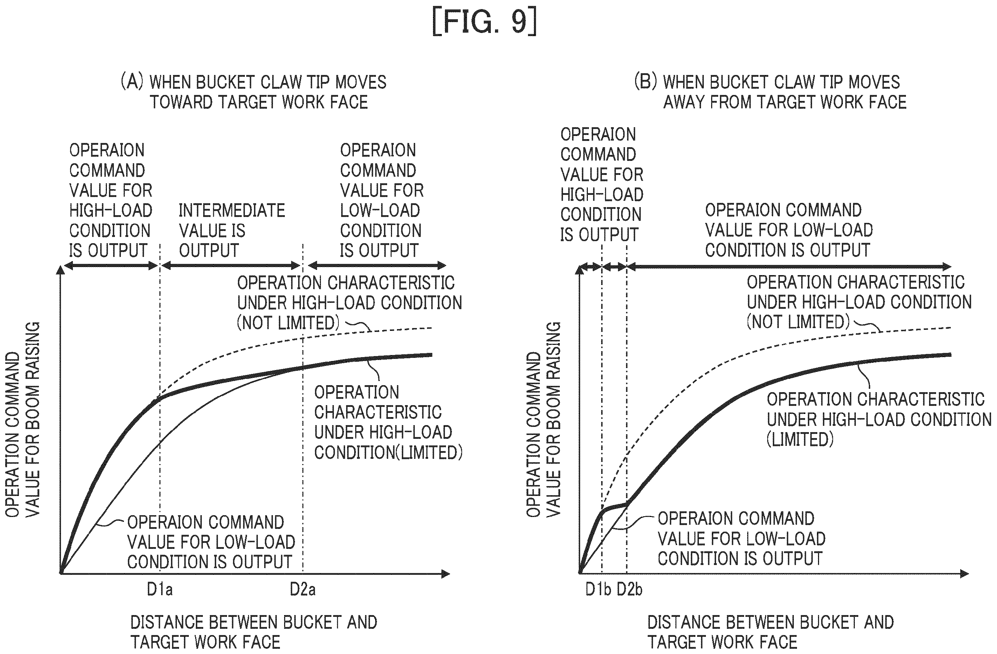

FIG. 9 depicts diagrams illustrating corrected operation command values at the time when the load on the boom cylinder 20A is high. In a case where the bucket 22 approaches the construction target surface (in a case where the demanded motion vector is of a direction toward the construction target surface), when the load on the actuator is low, an operation command value is determined according to an operation characteristic under low-load condition, as indicated by the thinner-solid-line curve in FIG. 9(A). On the other hand, when the load on the actuator is high, an operation command value is determined according to an operation characteristic under high-load condition, as indicated by the thicker-solid-line curve, in a region where the distance between the bucket 22 and the construction target surface is smaller than the preset value D1a, and approaches the operation command value according to the operation characteristic under low-load condition as the distance between the bucket 22 and the construction target surface increases.

In a case where the bucket 22 moves away from the construction target surface (in a case where the demanded motion vector is of a direction away from the construction target surface), when the load on the actuator is low, an operation command value is determined according to an operation characteristic under low-load condition, as indicated by the thinner-solid-line curve in FIG. 9(B). On the other hand, when the load on the actuator is high, an operation command value is determined according to an operation characteristic under high-load condition, as indicated by the thicker-solid-line curve, in a region where the distance between the bucket 22 and the construction target surface is smaller than the preset value D1b, and approaches the operation command value according to the operation characteristic under low-load condition as the distance between the bucket 22 and the construction target surface increases. Inasmuch as the preset values D1b and D2b are set to values smaller than the preset values D1a and D2a, when the bucket claw tip moves away from the construction target surface, the operation command value for low-load condition is output at a stage where the distance between the bucket 22 and the construction target surface is smaller than that when the bucket claw tip approaches the construction target surface.

It can be seen from the foregoing that, when the bucket claw tip moves toward the construction target surface, the operating velocities of the actuators 20A, 21A, and 22A can be accurately controlled by reducing the extent to which the correction amounts for the operation command values are limited, and when the bucket claw tip moves away from the construction target surface, the operability can be increased by increasing the extent to which the correction amounts for the operation command values is limited.

<Method of estimating an actuator load>

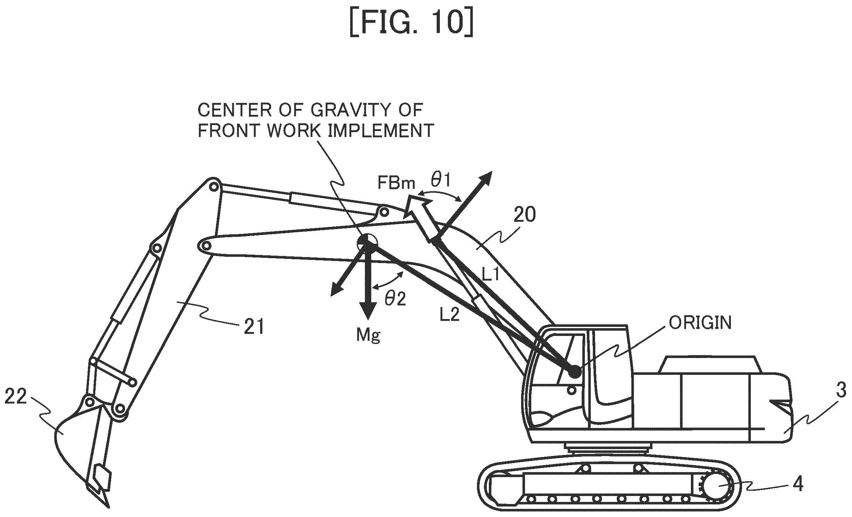

A method of estimating the load acting on an actuator will be described below with respect to the boom cylinder 20A as the actuator, for example. As illustrated in FIG. 10, the load acting on the boom cylinder 20A can be determined from a cylinder thrust required to hold the tare weight Mg of the front work implement 2.

The thrust FBm of the boom cylinder 20A is determined by solving a balancing expression (Equation 2) of a moment around an origin, as illustrated in FIG. 10, for example:

[Math. 2]

$$L1 \cdot FBm \cdot Cos\theta1 - L2 \cdot M \cdot g \cdot Sin\theta2 = 0$$

L1: distance between the origin and the boom cylinder 20A
$\theta1$: angle formed between the origin and the thrust FBm of the boom cylinder 20A
M: mass of the front work implement
g: gravitational acceleration
L2: distance between the origin and the center of gravity of the front work implement 2
$\theta2$: angle formed between the origin and the center of gravity of the front work implement 2

<Excavation trajectory after the operation command value has been corrected>

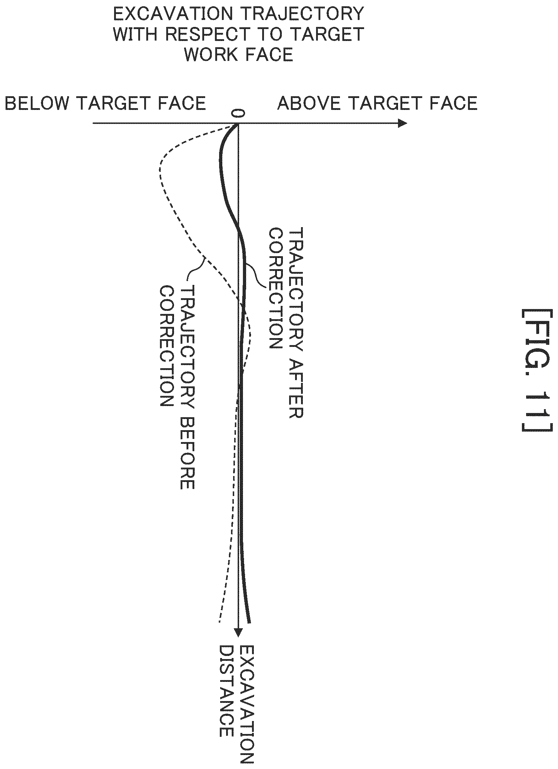

When the load on the actuator is large, the excavation trajectory before the operation command value is corrected drops largely below the construction target surface because the actual velocities of the actuators 20A, 21A, and 22A deviate largely from the demanded velocities for them, as illustrated in FIG. 11. In contrast, the excavation trajectory after the operation command value is corrected drops scarcely below the construction target surface because the deviations of the actual velocities of the actuators 20A, 21A, and 22A from the demanded velocities for them are smaller.

<Control sequence>

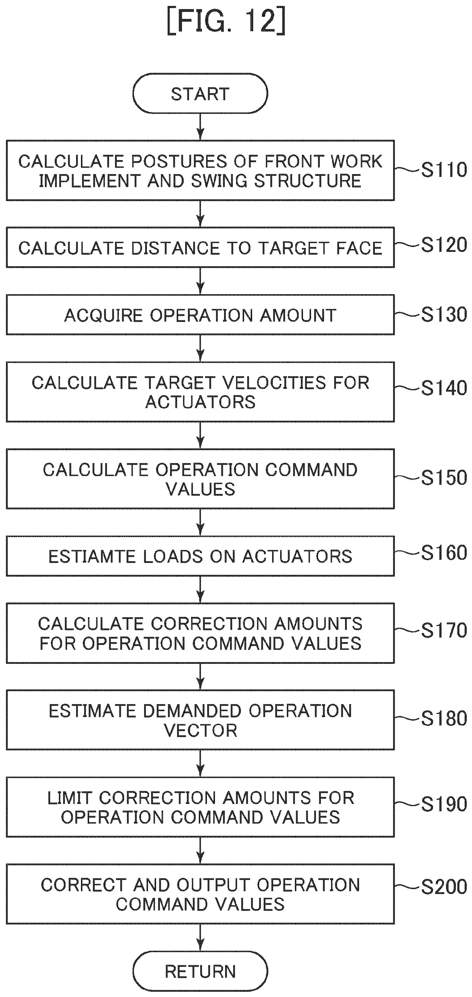

FIG. 12 is a flowchart illustrating processing of the information processing device 34. The steps will be described successively below.

In step S110, postures of the front work implement 2 and the swing structure 3 are calculated on the basis of angle information from the posture sensor 30.

In step S120, the distance from the distal end of the front work implement to a construction target surface is calculated.

In step S130, an operation amount input to the operation input device 33 is acquired.

In step S140, target velocitys for the actuators 20A, 21A, and 22A for driving the front work implement 2 are calculated on the basis of the postures of the front work implement 2 and the swing structure 3, the distance from the distal end of the front work implement to the construction target surface, and the operation amount input to the operation input device 33.

In step S150, operation command values are calculated on the basis of the target velocitys for the actuators 20A, 21A, and 22A.

In step S160, loads on the actuators 20A, 21A, and 22A are estimated on the basis of the postures of the front work implement 2 and the swing structure 3 and load information obtained from the load sensor 27.

In step S170, correction amounts for the operation command values are calculated from the estimated loads on the actuators 20A, 21A, and 22A.

In step S180, a demanded motion vector for the tip end of the front work implement is estimated from the postures of the front work implement 2 and the swing structure 3, the operation amount input to the operation input device 33, and the position of the construction target surface.

In step S190, the correction amounts for the operation command values are limited depending on the distance from the distal end of the front work implement to the construction target surface and the demanded motion vector.

In step S200, the operation command values calculated in step S150 are corrected by adding the limited correction amounts to the operation command values, and the corrected operation command values are output to the drive device 35.

(Conclusions)

According to the present embodiment, the work machine 1 includes the machine main body 3, the front work implement 2 that is vertically pivotably mounted on the machine main body 3 and that has the working attachment 22, the actuators 20A, 21A, and 22A for driving the front work implement 2, the drive device 35 for driving the actuators 20A, 21A, and 22A, the operation input device 33 for instructing the actuators 20A, 21A, and 22A to operate, the posture sensor 30 for sensing postures of the machine main body 3 and the front work implement 2, the target surface information setting device 100 for setting a construction target surface for the working attachment 22, and the controller 34a that outputs operation command values for the actuators 20A, 21A, and 22A to the drive device 35 on the basis of information input from the operation input device 33, the posture sensor 30, and the target surface information setting device 100, such that the working attachment 22 is positioned along or above the construction target surface, the work machine 1 including the load sensor 27 for sensing loads on the actuators 20A, 21A, and 22A, in which the controller 34a is configured to calculate target velocitys for the actuators 20A, 21A, and 22A on the basis of the operation amount from the operation input device 33, the postures, and the distance between the working attachment 22 and the construction target surface, calculate operation command values for the actuators 20A, 21A, and 22A on the basis of the target velocitys, calculate correction amounts for the operation command values on the basis of the loads on the actuators 20A, 21A, and 22A sensed by the load sensor 27 and the distance between the working attachment 22 and the construction target surface, and add the correction amounts to the operation command values.

According to the present embodiment configured as described above, the operation command values for the actuators 20A, 21A, and 22A are calculated in such a manner as to reduce the distance between the working attachment 22 and the construction target surface, and the correction amounts for the operation command values are calculated on the basis of the loads on the actuators 20A, 21A, 22A and added to the operation command values. It is thus possible to make the working attachment 22 operate accurately along the construction target surface in the vicinity thereof, and to allow the operator to operate the work machine while recognizing the load acting on the front work implement thereof when the working attachment 22 is not in the vicinity of the construction target surface.

Moreover, the controller 34a according to the present embodiment is configured to increase the correction amounts as the loads on the actuators 20A, 21A, and 22A increase. It is thus possible to keep constant the velocities of the actuators 20A, 21A, and 22A with respect to the operation amount from the operation input device 33 irrespective of the loads on the actuators 20A, 21A, and 22A.

Further, the controller 34a according to the present embodiment is configured to limit the correction amounts depending on the distance, not to limit the correction amounts in a case where the distance is smaller than the first preset value D1a (D1b), to set the correction amounts to zero in a case where the distance is equal to or larger than the second preset value D2a (D2b) that is larger than the first preset value D1a (D1b), and to increase the extent to which the correction amounts are limited as the distance increases in a case where the distance is equal to or larger than the first preset value D1a (D1b) but smaller than the second preset value D2a (D2b). Since the extent to which the correction amounts are limited continuously changes depending on the distance between the bucket 22 and the construction target surface, it is possible to reduce operator's strange and uneasy feelings at the time of switching between the machine control state and the manual operation state.

The controller 34a according to the present embodiment, in addition, is configured to calculate the demanded motion vector for the tip end of the front work implement on the basis of the operation amount and set each of the first preset value D1b and the second preset value D2b in a case where the demanded motion vector is of a direction away from the construction target surface to a value smaller than each of the first preset value D1a and the second preset value D2a in a case where the demanded motion vector is of a direction toward the construction target surface. When the bucket 22 is operated to move in a direction away from the construction target surface, therefore, control by the machine control is quickly canceled, so that the operability of the front work implement 2 is increased.

Moreover, the controller 34a according to the present embodiment is configured to calculate the correction amounts on the basis of the loads on the actuators 20A, 21A, and 22A sensed by the load sensor 27, in a case where the distance is smaller than the second preset value D2a (D2b), and calculate the operation command values on the assumption that the loads on the actuators 20A, 21A, 22A are loads at the time when the front work implement takes a predetermined posture, in a case where the distance is equal to or larger than the second preset value D2a (D2b). It is thus possible to reduce a processing burden on the controller 34a in a case where the distance between the bucket 22 and the construction target surface is equal to or larger than the second preset value D2a (D2b).

Further, the controller 34a according to the present embodiment is configured to calculate the correction amounts on the basis of the loads on the actuators 20A, 21A, 22A sensed by the load sensor 27, in a case where the distance is smaller than the second preset value D2a (D2b), and calculate the operation command values on the basis of a preset relation between the operation amount and the operation command values, in the case where the distance is equal to or larger than the second preset value D2a (D2b). It is thus possible to increase the operability of the front work implement 2 in the case where the distance between the bucket 22 and the construction target surface is equal to or larger than the second preset value D2a (D2b).

The work machine 1 according to the present embodiment includes the machine information setting device 120 for setting the center of gravity and mass of the front work implement 2. The controller 34a is configured to calculate loads on the actuators 20A, 21A, and 22A on the basis of the postures of the machine main body 3 and the front work implement 2, the postures being sensed by the posture sensor 30, and the center of gravity and mass of the front work implement 2, the century of gravity and the mass being set by the machine information setting device 120. It is thus possible to dispense with the load sensor 27 for sensing loads on the actuators 20A, 21A, and 22A.

While the embodiment of the present invention has been described in detail above, the present invention is not limited to the above-described embodiment. The above embodiment has been described in detail for an easier understanding of the present invention, and the present invention is not necessarily limited to work machines including all the details described above.

Description of Reference Characters

    1: Hydraulic excavator (work machine)
    2: Front work implement
    3: Swing structure (machine main body)
    4: Track structure
    10: Control system
    20: Boom

20A: Boom cylinder (actuator)
20BP, 20RP: Pressure sensor
20S: Boom IMU
21: Arm
21A: Arm cylinder (actuator)
21BP, 21RP: Pressure sensor
21S: Arm IMU
22: Bucket (working attachment)
22A: Bucket cylinder (actuator)
22B: First link
22BP: Pressure sensor
22C: Second link
22RP: Pressure sensor
22S: Bucket IMU
27: Load sensor
27a: Pressure sensor
30: Posture sensor
30a: Angular velocity sensor
30b: Acceleration sensor
30S: Swing structure IMU
31: Main frame
32: Cabin
33: Operation input device
33a: Operation lever
33b: Operation input amount sensor
34: Information processing device
34a: Information processing controller
35: Drive device
35a: Hydraulic pump
35b: Directional control valve
35c: Solenoid control valve
36: Prime mover
36a: Engine
37: Counterweight
38: Swing motor
40: Track frame
41: Track motor
42: Crawler belt
100: Target surface information setting device
100a: Target surface information setting controller
110: Image display device
110a: Display monitor
120: Machine information setting device
120a: Machine information setting controller
310: Target velocity computing section
320: Operation command value computing section
410: Posture computing section
420: Distance-to-target surface computing section
510: Demanded motion vector estimating section
520: Load estimating section
610: Operation command value correction amount computing section
620: Operation command value correcting section

**Claims**

1. A work machine comprising:

a machine main body;

a front work implement that is vertically pivotably mounted on the machine main body and that has a working attachment;

an actuator for driving the front work implement;

a drive device for driving the actuator;

an operation input device for instructing the actuator to operate;

a posture sensor for sensing postures of the machine main body and the front work implement;

a target surface information setting device for setting a construction target surface for the working attachment; and

a controller that outputs an operation command value for the actuator to the drive device on a basis of information input from the operation input device, the posture sensor, and the target surface information setting device, such that the working attachment is positioned along or above the construction target surface;

the work machine including a load sensor for sensing a load on the actuator,

wherein the controller is configured to

calculate a target velocity for the actuator on a basis of an operation amount from the operation input device, the posture, and a distance between the working attachment and the construction target surface,

calculate an operation command value for the actuator on a basis of the target velocity,

calculate a correction amount for the operation command value on a basis of the load on the actuator sensed by the load sensor and the distance between the working attachment and the construction target surface, and

add the correction amount to the operation command value.

2. The work machine according to claim 1, wherein the controller is configured to increase the correction amount as the load on the actuator increases.

3. The work machine according to claim 1, wherein the controller is configured

to limit the correction amount depending on the distance,

not to limit the correction amount in a case where the distance is smaller than a first preset value,

to set the correction amount to zero in a case where the distance is equal to or larger than a second preset value that is larger than the first preset value, and

to increase an extent to which the correction amount is limited as the distance increases, in a case where the distance is equal to or larger than the first preset value but smaller than the second preset value.

4. The work machine according to claim 3, wherein the controller is configured to

calculate a demanded motion vector for a tip end of the front work implement on a basis of the operation amount, and

set each of the first preset value and the second preset value in a case where the demanded motion vector is of a direction away from the construction target surface to a value smaller than each of the first preset value and the second preset value in a case where the demanded motion vector is of a direction toward the construction target surface.

5. The work machine according to claim 3, wherein the controller is configured to

calculate the correction amount on the basis of the load on the actuator sensed by the load sensor, in a case where the distance is smaller than the second preset value, and

calculate the operation command value on an assumption that the load on the actuator is a load at a time when the front work implement takes a predetermined posture, in a case where the distance is equal to or larger than the second preset value.

6. The work machine according to claim 3, wherein the controller is configured to

calculate the correction amount on the basis of the load on the actuator sensed by the load sensor, in a case where the distance is smaller than the second preset value, and

calculate the operation command value on a basis of a preset relation between the operation amount and the operation command value, in a case where the distance is equal to or larger than the second preset value.

7. The work machine according to claim 1, further comprising:

a machine information setting device for setting a center of gravity and mass of the front work implement, wherein the controller is configured to calculate a load on the actuator on a basis of the postures of the machine main body and the front work implement sensed by the posture sensor, and a center of gravity and mass of the front work implement, the center of gravity and the mass being set by the machine information setting device.

[FIG. 1]

## [FIG. 2]

[FIG. 3]

[FIG. 4]

EXCAVATING
DIRECTION

GROUND

TARGET WORK FACE

20

21

22

3

4

[FIG. 5]

[FIG. 6]

EXCAVATION TRAJECTORY
WITH RESPECT TO TARGET
WORK FACE

EXCAVATION DISTANCE

TRAJECTORY UNDER
LOW-LOAD CONDITION

TRAJECTORY UNDER
HIGH-LOAD CONDITION

ABOVE TARGET FACE

BELOW TARGET FACE

[FIG. 7]

[FIG. 8]

(A) WHEN BUCKET CLAW TIP MOVES
TOWARD TARGET WORK FACE

DISTANCE BETWEEN BUCKET AND
TARGET WORK FACE

(B) WHEN BUCKET CLAW TIP MOVES
AWAY FROM TARGET WORK FACE

DISTANCE BETWEEN BUCKET AND
TARGET WORK FACE

EP 4 596 794 A1

## [FIG. 9]

**(A) WHEN BUCKET CLAW TIP MOVES TOWARD TARGET WORK FACE**

OPERAION COMMAND VALUE FOR HIGH-LOAD CONDITION IS OUTPUT

INTERMEDIATE VALUE IS OUTPUT

OPERAION COMMAND VALUE FOR LOW-LOAD CONDITION IS OUTPUT

*y-axis:* OPERATION COMMAND VALUE FOR BOOM RAISING

OPERATION CHARACTERISTIC UNDER HIGH-LOAD CONDITION (NOT LIMITED)

OPERATION CHARACTERISTIC UNDER HIGH-LOAD CONDITION(LIMITED)

OPERAION COMMAND VALUE FOR LOW-LOAD CONDITION IS OUTPUT

D1a    D2a

*x-axis:* DISTANCE BETWEEN BUCKET AND TARGET WORK FACE

**(B) WHEN BUCKET CLAW TIP MOVES AWAY FROM TARGET WORK FACE**

OPERAION COMMAND VALUE FOR HIGH-LOAD CONDITION IS OUTPUT

OPERAION COMMAND VALUE FOR LOW-LOAD CONDITION IS OUTPUT

*y-axis:* OPERATION COMMAND VALUE FOR BOOM RAISING

OPERATION CHARACTERISTIC UNDER HIGH-LOAD CONDITION (NOT LIMITED)

OPERATION CHARACTERISTIC UNDER HIGH-LOAD CONDITION (LIMITED)

OPERAION COMMAND VALUE FOR LOW-LOAD CONDITION IS OUTPUT

D1b D2b

*x-axis:* DISTANCE BETWEEN BUCKET AND TARGET WORK FACE

EP 4 596 794 A1

[FIG. 10]

EXCAVATION TRAJECTORY
WITH RESPECT TO TARGET
WORK FACE

BELOW TARGET FACE    0    ABOVE TARGET FACE

TRAJECTORY AFTER
CORRECTION

TRAJECTORY BEFORE
CORRECTION

EXCAVATION
DISTANCE

[FIG. 11]

# [FIG. 12]

```
                    ┌─────────────┐
                    │   START     │
                    └──────┬──────┘
                           ▼
┌─────────────────────────────────────┐
│ CALCULATE POSTURES OF FRONT WORK     │─S110
│ IMPLEMENT AND SWING STRUCTURE        │
└──────────────────┬──────────────────┘
                   ▼
┌─────────────────────────────────────┐
│ CALCULATE DISTANCE TO TARGET FACE    │─S120
└──────────────────┬──────────────────┘
                   ▼
┌─────────────────────────────────────┐
│ ACQUIRE OPERATION AMOUNT             │─S130
└──────────────────┬──────────────────┘
                   ▼
┌─────────────────────────────────────┐
│ CALCULATE TARGET VELOCITIES FOR      │─S140
│ ACTUATORS                            │
└──────────────────┬──────────────────┘
                   ▼
┌─────────────────────────────────────┐
│ CALCULATE OPERATION COMMAND          │─S150
│ VALUES                               │
└──────────────────┬──────────────────┘
                   ▼
┌─────────────────────────────────────┐
│ ESTIAMTE LOADS ON ACTUATORS          │─S160
└──────────────────┬──────────────────┘
                   ▼
┌─────────────────────────────────────┐
│ CALCULATE CORRECTION AMOUNTS         │─S170
│ FOR OPERATION COMMAND VALUES         │
└──────────────────┬──────────────────┘
                   ▼
┌─────────────────────────────────────┐
│ ESTIMATE DEMANDED OPERATION          │─S180
│ VECTOR                               │
└──────────────────┬──────────────────┘
                   ▼
┌─────────────────────────────────────┐
│ LIMIT CORRECTION AMOUNTS FOR         │─S190
│ OPERATION COMMAND VALUES             │
└──────────────────┬──────────────────┘
                   ▼
┌─────────────────────────────────────┐
│ CORRECT AND OUTPUT OPERATION         │─S200
│ COMMAND VALUES                       │
└──────────────────┬──────────────────┘
                   ▼
            ┌─────────────┐
            │   RETURN    │
            └─────────────┘
```

## INTERNATIONAL SEARCH REPORT

| International application No. |
| --- |
| **PCT/JP2023/029070** |

| A. | CLASSIFICATION OF SUBJECT MATTER |
| --- | --- |

***E02F 3/43***(2006.01)i; ***E02F 9/20***(2006.01)i; ***E02F 9/26***(2006.01)i
FI:    E02F3/43 C; E02F9/20 M; E02F9/26 B

According to International Patent Classification (IPC) or to both national classification and IPC

| B. | FIELDS SEARCHED |
| --- | --- |

Minimum documentation searched (classification system followed by classification symbols)

E02F3/43; E02F9/20; E02F9/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2020-125595 A (KOMATSU LTD.) 20 August 2020 (2020-08-20) paragraphs [0034]-[0049], fig. 5-7 | 1-3, 5-7 |
| A | | 4 |
| Y | WO 2020/039833 A1 (KOBE STEEL, LTD.) 27 February 2020 (2020-02-27) paragraph [0009], fig. 4, 5 | 1-3, 5-7 |
| A | | 4 |
| Y | WO 2020/196116 A1 (HITACHI CONSTRUCTION MACHINERY CO., LTD.) 01 October 2020 (2020-10-01) paragraphs [0052]-[0086], fig. 6, 13 | 1-3, 5-7 |
| A | | 4 |

☐ Further documents are listed in the continuation of Box C.      ☑ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **11 September 2023** | **26 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/029070**

| Patent document cited in search report | | | Publication date (day/month/year) | Patent family member(s) | | | Publication date (day/month/year) |
|---|---|---|---|---|---|---|---|
| JP | 2020-125595 | A | 20 August 2020 | US | 2022/0127825 | A1 | |
| | | | | paragraphs [0048]-[0062], fig. 5-7 | | | |
| | | | | WO | 2020/158243 | A1 | |
| | | | | CN | 113272497 | A | |
| | | | | KR | 10-2021-0098527 | A | |
| WO | 2020/039833 | A1 | 27 February 2020 | US | 2021/0301492 | A1 | |
| | | | | paragraph [0009], fig. 4, 5 | | | |
| | | | | EP | 3816351 | A1 | |
| | | | | CN | 112513380 | A | |
| WO | 2020/196116 | A1 | 01 October 2020 | US | 2022/0056663 | A1 | |
| | | | | paragraphs [0074]-[0113], fig. 6, 10 | | | |
| | | | | EP | 3951074 | A1 | |
| | | | | KR | 10-2021-0034069 | A | |
| | | | | CN | 112639212 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015137524 A